# EUROPEAN PATENT APPLICATION

(11) **EP 4 231 770 A1**
(43) Date of publication of application: **23.08.2023**
(21) Application number: 20957029.0
(22) Date of filing: 14.10.2020
(51) Int. Cl.: H04W 76/27

(54) **REFERENCE SIGNAL TRANSMISSION METHOD AND APPARATUS, AND DEVICE AND READABLE STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: dompatent von Kreisler Selting Werner - Partnerschaft von Patent- und Rechtsanwälten mbB
(86) International application number: PCT/CN2020/120777
(87) International publication number: WO 2022/077248

(57) **Abstract**

Provided are a reference signal transmission method and apparatus, and a device and a readable storage medium, wherein same relate to the field of communications. The method comprises: determining a positioning request, the positioning request being used for instructing a network device to send a resource configuration parameter of a positioning reference signal and/or the positioning reference signal to a terminal device; or, the positioning request being used for instructing the terminal device to send a positioning measurement result to the network device. The transmission of a positioning reference signal is indicated by means of a positioning request, that is, after the positioning request is determined and after a resource configuration parameter is determined according to the positioning request, the positioning reference signal is transmitted, so that the problem of signaling wastes caused by redundant transmissions of the positioning reference signal, and the problem of large positioning delay and low accuracy caused by a long transmission period of the positioning reference signal are avoided.

## Description

### TECHNICAL FIELD

The disclosure relates to a field of communication, and particularly to a method and an apparatus for reference signal transmission, a device and a readable storage medium.

### BACKGROUND

A positioning reference signal (PRS) has been newly defined in a New Radio Rel-16 system. Periodic PRS transmission and repeated transmission of PRS resources within a cycle are supported in the system.

In the related art, the PRS may only be sent once within a slot, and a number of symbols occupied by the PRS may be 2, 4, 6, or 12 consecutive symbols within the slot.

However, the periodic PRS transmission may easily lead to problems such as a signaling waste, a large positioning delay or a poor accuracy.

### SUMMARY

Embodiments of the disclosure provide a method and an apparatus for reference signal transmission, a device and a readable storage medium, which may improve the transmission efficiency of a positioning reference signal. The technical solution is described as below.

According to an aspect of the disclosure, a method for reference signal transmission is provided, which is applicable to a terminal device. The method includes: determining a positioning request. The positioning request is configured to indicate a network device to send resource configuration parameters of a positioning reference signal and/or the positioning reference signal to the terminal device; or the positioning request is configured to indicate the terminal device to send a positioning measurement result to the network device.

In another aspect, a method for reference signal transmission is provided, which is applicable to a network device. The method includes: determining a positioning request. The positioning request is configured to indicate the network device to send resource configuration parameters of a positioning reference signal and/or the positioning reference signal to a terminal device; or the positioning request is configured to indicate the terminal device to send a positioning measurement result to the network device

In another aspect, an apparatus for reference signal transmission is provided, which is applicable to a terminal device. The apparatus includes: a processing module, configured to determine a positioning request. The positioning request is configured to indicate a network device to send resource configuration parameters of a positioning reference signal and/or the positioning reference signal to the terminal device; or the positioning request is configured to indicate the terminal device to send a positioning measurement result to the network device.

In another aspect, an apparatus for reference signal transmission is provided, which is applicable to a network device. The apparatus includes: a processing module, configured to determine a positioning request. The positioning request is configured to indicate the network device to send resource configuration parameters of a positioning reference signal and/or the positioning reference signal to a terminal device; or the positioning request is configured to indicate the terminal device to send a positioning measurement result to the network device.

In another aspect, a terminal device is provided. The terminal device includes a processor, a transceiver connected to the processor, and a memory configured to store an instruction executable by the processor. The processor is configured to load and execute the executable instruction to implement the method for reference signal transmission described in the above-mentioned embodiments of the disclosure.

In another aspect, a network device is provided. The network device includes a processor, a transceiver connected to the processor, and a memory configured to store an instruction executable by the processor. The processor is configured to load and execute the executable instruction to implement the method for reference signal transmission described in the above-mentioned embodiments of the disclosure.

In another aspect, a computer-readable storage medium is provided, storing with at least one instruction, at least one program, at least one code set, and at least one instruction set, which are loaded and executed by a processor to implement the method for reference signal transmission described in the above-mentioned embodiments of the disclosure.

The technical solutions of the embodiments of the disclosure bring out at least the following beneficial effects.

The positioning request is used to indicate the transmission of a positioning reference signal. That is, after the positioning request is determined, the resource configuration parameters are determined based on the positioning request, and the positioning reference signal is transmitted, thus avoiding a signaling waste caused by redundant transmission of the positioning reference signal, and the problem of large positioning delay and low accuracy caused by the relatively large transmission period of the positioning reference signal. In addition, the positioning request is also used to indicate the transmission of the positioning measurement result. That is, the positioning measurement result is transmitted after the positioning request is determined, thus providing a method for sending the positioning measurement result in a non-periodic way.

### BRIEF DESCRIPTION OF THE DRAWINGS

In order to more clearly illustrate the technical solutions in the embodiments of the disclosure, the drawings that need to be used in the description of the embodiments may be briefly introduced below. The drawings in the following description are only some embodiments of the disclosure. For those skilled in the art, other drawings may also be obtained based on these drawings without creative efforts.
FIG. 1 is a block diagram of a communication system according to an exemplary embodiment of the disclosure.
FIG. 2 is a flowchart of a method for reference signal transmission according to an exemplary embodiment of the disclosure.
FIG. 3 is a flowchart of a method for reference signal transmission according to another exemplary embodiment of the disclosure.
FIG. 4 is a flowchart of a method for reference signal transmission according to another exemplary embodiment of the disclosure.
FIG. 5 is a structural block diagram of an apparatus for reference signal transmission according to an exemplary embodiment of the disclosure.
FIG. 6 is a structural block diagram of an apparatus for reference signal transmission according to another exemplary embodiment of the disclosure.
FIG. 7 is a structural block diagram of a communication device according to an exemplary embodiment of the disclosure.

### DETAILED DESCRIPTION

In order to make the purpose, the technical solutions and the advantages of the disclosure clearer, the implementations of the disclosure may be further described in detail below in conjunction with the accompanying drawings.

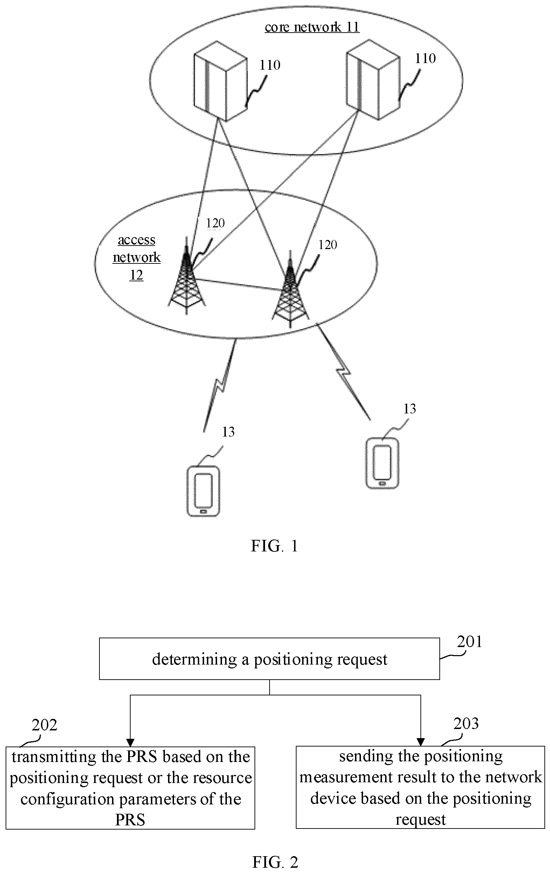

FIG. 1 shows a block diagram of a communication system according to an exemplary embodiment of the disclosure. The communication system may include: a core network 11, an access network 12 and a terminal 13.

The core network 11 includes several core network devices 110. The core network device 110 includes a device having access and mobility management function (AMF), session management function (SMF), and user plane function (UPF). Optionally, the core network 11 also includes a location management function (LMF). AMF is used to control functions of the terminal such as an access permission and a switch. SMF is used to provide server continuity and uninterrupted user experience of the server, such as, changes in the IP address and anchor point, etc. LMF is used to support positioning calculation, and obtain downlink positioning measurement results or positioning estimates from the terminal.

The access network 12 includes several access network devices 120. The access network device 120 may be a base station. The base station is a device deployed in an access network to provide a terminal with a wireless communication function. The base station may include various forms of macro base stations, micro base stations, relay stations, access points and so on. In systems using different wireless access technologies, names of devices with base station functions may be different. For example, in a long term evolution (LTE) system, it is called an eNodeB or eNB. In a 5G new radio (NR) system, it is called gNodeB or gNB. With the evolution of communication technology, the name "base station" may change. For convenience, in the embodiments of the disclosure, the above-mentioned devices that provide wireless communication functions for the terminals are collectively referred to as access network devices.

The terminal 13 may include various handheld devices, vehicle-mounted devices, wearable devices, computing devices, Internet of Things (IoT) devices, industrial Internet of Things (IIoT) devices, other processing devices connected to a wireless modem, with wireless communication functions, or various forms of user equipment (UE), mobile stations (MS), terminal devices and so on. For convenience of description, the above-mentioned devices are collectively referred to as terminal devices. The access network device 120 and the terminal device 13 communicate with each other through a radio technology, such as a Uu interface.

The technical solutions in the embodiments of the disclosure may be applied to various communication systems, for example, a global system of mobile communication (GSM) system, a code division multiple access (CDMA) system, a wideband code division multiple access (WCDMA) system, a general packet radio service (GPRS) system, a long term evolution (LTE) system, a LTE frequency division duplex (FDD) system, a LTE time division duplex (TDD) system, an advanced long Term Evolution (LTE-A) system, a New Radio (NR) system, an evolution system of the NR system, a LTE-based access to unlicensed spectrum (LTE-U) system, a NR-U system, a universal mobile telecommunication system (UMTS), a worldwide interoperability for microwave access (WiMAX) communication system, a wireless local area network (WLAN) system, a wireless fidelity (WiFi) system, a next generation communication system or other communication systems, etc.

Generally speaking, a number of connections supported by conventional communication systems is limited and easy to implement. However, with the development of communication technology, mobile communication systems may not only support conventional communication, but also support, for example, device to device (D2D) communication, machine to machine (M2M) communication, machine type communication (MTC), vehicle to vehicle (V2V) communication and vehicle to everything (V2X) system, etc. The embodiments of the disclosure may also be applied to these communication systems.

A positioning reference signal (PRS) has been newly defined in a New Radio Rel-16 system. Periodic PRS transmission is supported in the system. In one cycle, repeated transmission of PRS resources may be supported in the system. The system further configures a number of repeated transmissions in the cycle and a time interval between every two transmissions. The time interval is N slots, where N is a natural number. Currently, the PRS may only be sent once in a slot, and a number of symbols occupied by the PRS may be 2, 4, 6, or 12 consecutive symbols within the slot. The starting symbol position may be any one of the 1st to 13th symbols in the slot.

However, during the periodic transmission, there is a problem that signaling is wasted due to unnecessary transmission that is still performed, or a problem that the positioning time delay is large and the accuracy is not high enough due to a large transmission cycle.

The embodiments of the disclosure provide a method for on-demand PRS transmission, so that the PRS is transmitted according to actual positioning needs. This improves the resource usage efficiency, reduces the positioning delay, and improves the positioning accuracy. At the same time, a method for on-demand transmission of positioning measurement results is also provided.

FIG. 2 is a flowchart of a method for reference signal transmission according to an exemplary embodiment of the disclosure. The method applicable to a terminal device is taken as an example for illustration. As shown in FIG. 2, the method includes the following steps at 201-203.

At 201, a positioning request is determined.

In some embodiments, there are two situations for the terminal to determine the positioning request. Firstly, after the terminal determines the positioning request, it sends the positioning request to the network device. Secondly, the network device sends the positioning request to the terminal.

Optionally, the positioning request is used to indicate the network device to send resource configuration parameters of a PRS and/or the PRS to the terminal device, or the positioning request is used to indicate the terminal device to send a positioning measurement result to the network device.

At 202, the PRS is transmitted based on the positioning request or the resource configuration parameters of the PRS.

Optionally, the above-mentioned PRS includes: an uplink signal for positioning, such as a sounding reference signal (SRS) or other uplink signal (e.g., a random access preamble), or a downlink PRS. That is, the PRS includes an uplink signal sent by the terminal device to the network device or a downlink PRS sent by the network device to the terminal device.

The network device is an access network device or a network element with a LMF.

Optionally, when the positioning request is used to indicate the network device to send the resource configuration parameters and/or the PRS to the terminal device, 4 main cases are described as follows.

In the first case, after the terminal device determines the positioning request, the positioning request is sent to the access network device, that is, the UE sends the positioning request to the gNB.

In some embodiments, when the terminal device sends the positioning request to the access network device, the method includes the following ways at 1.1 to 1.2.

At 1.1, the positioning request is sent to the access network device through a physical random access channel (PRACH).

Optionally, a dedicated random access resource is used to indicate the positioning request, and the dedicated random access resource includes at least one of time-frequency resources or random access preamble resources.

In some embodiments, when the terminal device sends the positioning request to the access network device, the terminal device recommends the resource configuration parameters of the PRS to the access network device; or the terminal device does not recommend the resource configuration parameters of the PRS to the access network device but the access network device directly indicates the resource configuration parameters.

As an example, when the terminal device does not recommend resource configuration parameters to the access network device, the terminal only sends the positioning request through the PRACH, the access network device indicates the resource configuration parameters through a message (i.e. the Msg2) in a 4-step RACH and sends the downlink PRS to the terminal device at the same time. The terminal device measures the downlink PRS sent by the base station based on the resource configuration parameters, and then feeds back a measurement result to the access network device through a message (i.e., the Msg3) in the 4-step RACH.

As an example, when the terminal device recommends the resource configuration parameters to the access network device, the terminal device may also send positioning request supplementary information to the access network device. The positioning request supplementary information includes first indication information of the PRS, the first indication information is information of resource configuration recommendation parameters of the PRS recommended by the terminal device to the access network device. Optionally, the positioning request supplementary information is sent through physical uplink shared channel (PUSCH) resources in the Msg3 of the 4-step RACH or the Msg A of the 2-step RACH.

Optionally, the terminal device receives the resource configuration parameters indicated by the access network device, so as to measure the PRS based on the resource configuration parameters. Optionally, the terminal device receives second indication information of the PRS sent by the access network device through the Msg2 in the 4-step RACH, and the second indication information is used to indicate the resource configuration parameters of the PRS sent by the access network device. That is, the second indication information is used to indicate the resource configuration parameters of the downlink PRS sent by the access network device. Alternatively, the second indication information is used to indicate the resource configuration parameters of the uplink signal for positioning sent by the terminal.

Optionally, the terminal measures the downlink PRS sent by the access network device based on the resource configuration parameters, and feeds back a measurement result to the access network device. The terminal device sends the measurement result through the Msg3 in the 4-step RACH to the access network device.

At 1.2, the positioning request is sent to the access network device through a scheduling request (SR).

In some embodiments, the terminal device sends the positioning request on a physical uplink control channel (PUCCH) through the SR.

Optionally, after the access network device receives the SR, the access network device allocates PUSCH resources to the terminal device, and the terminal sends information of resource configuration recommendation parameters of the PRS on the PUSCH, the specific details of which is similar to the description at 1.1, without repeating these details here.

In the second case, after the access network device determines the positioning request, the positioning request is sent to the terminal device, that is, the gNB sends the positioning request to the UE.

In some embodiments, the access network device sends the positioning request to the terminal device by sending a paging message to the terminal device, and the terminal device receives the paging message sent by the access network device, where the paging message includes the positioning request. Optionally, the terminal device also receives a first downlink signaling sent by the access network device. The first downlink signaling is used to indicate third indication information of the PRS, and the third indication information includes the resource configuration parameters. The first downlink signaling includes at least one of a radio resource control (RRC) signaling, a medium access control (MAC) signaling, and a downlink control information (DCI) signaling.

In some embodiments, the access network device may also send the positioning request to the terminal device by directly sending a downlink signaling. That is, the terminal device receives a second downlink signaling sent by the access network device, where the second downlink signaling is used to indicate the positioning request through fourth indication information, the second downlink signaling includes at least one of the RRC signaling, the MAC signaling, and the DCI signaling, and the fourth indication information includes the resource configuration parameters of the PRS.

In the third case, after the terminal device determines the positioning request, the positioning request is sent to the network element with the LMF, that is, the UE sends the positioning request to the LMF.

Optionally, when the terminal sends the positioning request to the LMF, the terminal also sends the resource configuration recommendation parameters of the PRS to the LMF; or the terminal receives the resource configuration parameters directly sent by the LMF; or the terminal receives the resource configuration parameters sent by the LMF via the access network device.

In the fourth case, after the LMF determines the positioning request, the positioning request is sent to the terminal device, that is, the LMF sends the positioning request to the UE.

Optionally, when the LMF sends the positioning request to the terminal, it also directly sends the resource configuration parameters to the terminal device; or the LMF sends the resource configuration parameters to the terminal device via the access network device.

In some embodiments, the resource configuration parameters include at least one of a resource mapping identifier (ID) and a beam identifier.

The resource mapping identifier is used to indicate a time-frequency resource position, and the beam identifier is used to indicate a beam for transmitting the PRS.

Optionally, the terminal device receives resource indication information sent by the network device. The resource indication information includes at least one of a mapping relationship between resource mapping identifiers and time-frequency resource location parameters, and a mapping relationship between beam identifiers and reference signal identifiers indicating beam directions. The resource indication information is information of a resource position and/or a beam direction in which the network device indicates to the terminal device to transmit the PRS. The network device may be implemented as an LMF or an access network device.

That is, in some embodiments, a first correspondence between resource mapping identifiers and time-frequency resource location parameters is preconfigured; and/or, a second corresponding relationship between beam identifiers and reference signal identifiers indicating beam directions is preconfigured.

In some embodiments, the above time-frequency resource location parameters include at least one of frequency domain parameters, time domain parameters and space domain parameters.

That is, the resource mapping method includes at least one of the following parameters:
1. Pattern ID (i.e., the resource mapping identifier), is used for mapping to obtain time-frequency resource location parameters;
2. Frequency domain parameter 1, including: bandwidth part (BWP) information, BWP resource information, sub-carrier space (SCS) information, a starting resource block (RB) and other information;
3. Frequency domain parameter 2, including: a comb size (Combsize), a resource element (RE) offset value in each RB and other information;
4. Time domain resource 1, including: a number of symbols occupied, a starting symbol position and other information;
5. Time domain resource 2, including: a number of transmissions, a time interval between every two transmissions and other information; and
6. Space domain parameters, including a number of ports, beam information, and other information.

The correspondence between beam IDs and reference signal IDs includes at least one of the following parameters:
1. Beam ID (i.e., a beam identifier);
2. Transmission reception point (TRP) ID; and
3. Reference signal ID.

Optionally, the above parameters may be sent by the LMF to the terminal device through a protocol signaling, or sent by the access network device to the terminal device through the RRC signaling, or sent by the access network device to the terminal device through the RRC signaling and the MAC signaling.

It should be noted that, the above content is described by taking the positioning request indicating the network device to send the resource configuration parameters of the PRS and/or the PRS to the terminal device as an example. In some embodiments, the positioning request is used to indicate the terminal to send the measurement result to the network device.

At 203, a positioning measurement result is sent to the network device based on the positioning request.

That is, the terminal has obtained the measurement result by measuring the downlink PRS. Then, the terminal sends a positioning request that requests to send the measurement result to the network device.

In response to the positioning request indicating the terminal to send the positioning measurement result to the network device, the positioning measurement result is sent to the network device based on the positioning request.

Optionally, when the positioning request is used to indicate to send the positioning measurement result, the positioning request is sent through the RACH, so that the measurement result is sent through the PUSCH in the Msg3 of the 4-step RACH or the Msg A of the 2-step RACH.

In some embodiments, the positioning request may also be sent through the SR, and the measurement result is sent through the PUSCH indicated by DCI signaling scheduling. The DCI signaling scheduling is sent to the terminal device after the access network device receives the SR.

Optionally, the positioning request is a request sent by the network device to the terminal device. As an example, the access network device sends a paging message to the terminal device, and the paging message includes the positioning request. Since the positioning request is used to indicate the terminal device to send the positioning measurement result to the network device, the terminal device sends the positioning measurement result to the access network device through the PUSCH resources in the Msg3 of the 4-step RACH or the Msg A of the 2-step RACH.

To sum up, with the method for reference signal transmission according to the embodiment, the positioning request is used to indicate the PRS transmission. That is, after the positioning request is determined, the resource configuration parameters are determined based on the positioning request and the PRS is transmitted, thus avoiding a signaling waste caused by redundant PRS transmission, and the problem of large positioning delay and low accuracy caused by the relatively large PRS transmission period. At the same time, with the method for sending the positioning measurement result in this embodiment, the positioning request is also used to indicate the transmission of the positioning measurement result, thus avoiding the signaling waste or time delay caused by the periodic transmission of the positioning measurement result.

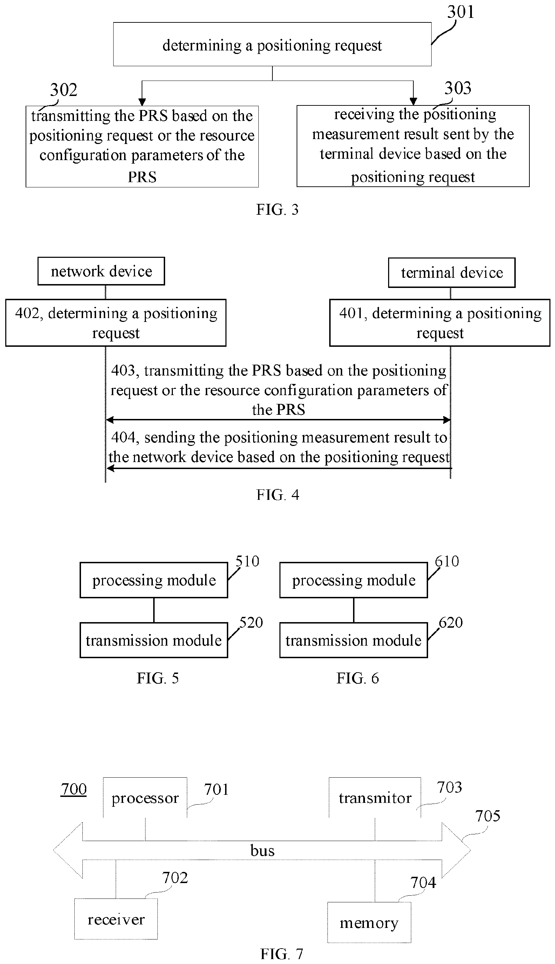

FIG. 3 is flowchart of a method for reference signal transmission according to another exemplary embodiment of the disclosure. The method applicable to a network device is taken as an example for illustration. As shown in FIG. 3, the method includes the following steps at 301-303.

At 301, a positioning request is determined.

In some embodiments, there are two situations for the network device to determine the positioning request. Firstly, after the terminal determines the positioning request, it sends the positioning request to the network device. Secondly, after the network device determines the positioning request, it sends the positioning request to the terminal.

The positioning request is used to indicate the network device to send the resource configuration parameters of a PRS and/or the PRS to the terminal device; or the positioning request is used to indicate the terminal device to send a positioning measurement result to the network device.

At 302, the PRS is transmitted based on the positioning request or the resource configuration parameters of the PRS.

Optionally, the above-mentioned PRS includes: an uplink signal for positioning, such as a sounding reference signal (SRS) or other uplink signal (e.g., a random access preamble), or a downlink PRS. That is, the PRS includes an uplink signal sent by the terminal device to the network device or a downlink PRS sent by the network device to the terminal device.

Optionally, when the positioning request is used to indicate the network device to send the resource configuration parameters and/or the PRS to the terminal device, 4 main cases are described as follows.

In the first case, after the terminal device determines the positioning request, the positioning request is sent to the access network device, that is, the UE sends the positioning request to the gNB.

In some embodiments, when the terminal device sends the positioning request to the access network device, the method includes the following ways at 1.1 to 1.2.

At 1.1, the positioning request sent by the terminal device is received through a physical random access channel (PRACH).

Optionally, a dedicated random access resource is used to indicate the positioning request, and the dedicated random access resource includes at least one of time-frequency resources or random access preamble resources.

In some embodiments, when the terminal device sends the positioning request to the access network device, the terminal device recommends the resource configuration parameters of the PRS to the access network device; or, the terminal device does not recommend the resource configuration parameters of the PRS to the access network device but the access network device directly indicates the resource configuration parameters.

As an example, when the terminal device does not recommend resource configuration parameters to the access network device, the terminal only sends the positioning request through the PRACH, the access network device indicates the resource configuration parameters through a message (i.e. the Msg2) in a 4-step RACH and sends the downlink PRS to the terminal device at the same time. The terminal device measures the downlink PRS sent by the base station based on the resource configuration parameters, and then feeds back a measurement result to the access network device through a message (i.e., the Msg3) in the 4-step RACH. The access network device receives the measurement result sent by the terminal device.

As an example, when the terminal device recommends the resource configuration parameters to the access network device, the terminal device may also send positioning request supplementary information to the access network device. The positioning request supplementary information includes first indication information of the PRS, the first indication information is information of resource configuration recommendation parameters of the PRS recommended by the terminal device to the access network device. Optionally, the positioning request supplementary information is sent through physical uplink shared channel (PUSCH) resources in the Msg3 of the 4-step RACH or the Msg A of the 2-step RACH.

Optionally, the access network device indicates the resource configuration parameters to the terminal device, so that the terminal device measures the PRS based on the resource configuration parameters.

At 1.2, the positioning request sent by the terminal device is received through a scheduling request (SR).

In some embodiments, the terminal device sends the positioning request on a physical uplink control channel (PUCCH) through the SR.

Optionally, after the access network device receives the SR, the access network device allocates PUSCH resources to the terminal device, and the terminal sends information of resource configuration recommendation parameters of the PRS on the PUSCH.

In the second case, after the access network device determines the positioning request, the positioning request is sent to the terminal device, that is, the gNB sends the positioning request to the UE.

In some embodiments, the access network device sends the positioning request to the terminal device by sending a paging message to the terminal device. The access network device sends a paging message to the terminal device, where the paging message includes the positioning request. Optionally, the terminal device also receives a first downlink signaling sent by the access network device. The first downlink signaling is used to indicate third indication information of the PRS, and the third indication information includes the resource configuration parameters. The first downlink signaling includes at least one of: an RRC signaling, an MAC signaling, and a DCI signaling.

In some embodiments, the access network device may also send the positioning request to the terminal device by directly sending a downlink signaling. That is, the access network device sends a second downlink signaling to the terminal device, where the second downlink signaling is used to indicate the positioning request through fourth indication information, the second downlink signaling includes at least one of the RRC signaling, the MAC signaling, and the DCI signaling, and the fourth indication information includes the resource configuration parameters of the PRS.

In the third case, after the terminal device determines the positioning request, the positioning request is sent to the network element with the LMF, that is, the UE sends the positioning request to the LMF.

Optionally, when the terminal sends the positioning request to the LMF, the terminal also sends the resource configuration recommendation parameters of the PRS to the LMF; or the terminal receives the resource configuration parameters directly sent by the LMF; or the terminal receives the resource configuration parameters sent by the LMF via the access network device.

In the fourth case, after the LMF determines the positioning request, the positioning request is sent to the terminal device, that is, the LMF sends the positioning request to the UE.

Optionally, when the LMF sends the positioning request to the terminal, it directly sends the resource configuration parameters to the terminal device; or the LMF sends the resource configuration parameters to the terminal device via the access network device.

In some embodiments, the resource configuration parameters include at least one of a resource mapping identifier (ID) and a beam identifier.

The resource mapping identifier is used to indicate a time-frequency resource position, and the beam identifier is used to indicate a beam for transmitting the PRS.

Optionally, the network device sends resource indication information to the terminal device. The resource indication information includes at least one of: a mapping relationship between resource mapping identifiers and time-frequency resource location parameters, and a mapping relationship between beam identifiers and reference signal identifiers indicating beam directions. The resource indication information is information of a resource position and/or a beam direction in which the network device indicates to the terminal device to transmit the PRS. The network device may be implemented as an LMF or an access network device.

That is, in some embodiments, a first correspondence between resource mapping identifiers and time-frequency resource location parameters is preconfigured; and/or, a second corresponding relationship between beam identifiers and reference signal identifiers indicating beam directions is preconfigured.

In some embodiments, the above time-frequency resource location parameters include at least one of frequency domain parameters, time domain parameters and space domain parameters.

It should be noted that, the above content is described by taking the positioning request indicating the network device to send the resource configuration parameters of the PRS and/or the PRS to the terminal device as an example. In some embodiments, the positioning request is used to indicate the terminal to send the measurement result to the network device.

At 303, a positioning measurement result sent by the terminal device is received based on the positioning request.

That is, the terminal has obtained the measurement result by measuring the downlink PRS. Then, the terminal sends a positioning request that requests to send the measurement result to the network device.

In response to the positioning request indicating the terminal to send the positioning measurement result to the network device, the positioning measurement result sent by the terminal device is received based on the positioning request.

Optionally, when the positioning request is used to indicate to send the positioning measurement result, the positioning request is sent through the PRACH, so that the measurement result is sent through the PUSCH in the Msg3 of the 4-step RACH or the Msg A of the 2-step RACH.

In some embodiments, the positioning request may also be sent through the SR, and the measurement result is sent through the PUSCH indicated by DCI signaling scheduling. The DCI signaling scheduling is sent to the terminal device after the access network device receives the SR.

Optionally, the positioning request is a request sent by the network device to the terminal device. As an example, the access network device sends a paging message to the terminal device, and the paging message includes the positioning request. Since the positioning request is used to indicate the terminal device to send the positioning measurement result to the network device, the terminal device sends the positioning measurement result to the access network device through the PUSCH resources in the Msg3 of the 4-step RACH or the Msg A of the 2-step RACH.

To sum up, with the method for reference signal transmission according to the embodiment, the positioning request is used to indicate the PRS transmission. That is, after the positioning request is determined, the resource configuration parameters are determined based on the positioning request and the PRS is transmitted, thus avoiding a signaling waste caused by redundant PRS transmission, and the problem of large positioning delay and low accuracy caused by the relatively large PRS transmission period. At the same time, with the method for sending the positioning measurement result in this embodiment, the positioning request is also used to indicate the transmission of the positioning measurement result, thus avoiding the signaling waste or time delay caused by the periodic transmission of the positioning measurement result.

FIG. 4 is a flowchart of a method for reference signal transmission according to another exemplary embodiment of the disclosure. The method applicable to a communication system is taken as an example for illustration. As shown in FIG. 4, the method includes the following steps at 401-404.

At 401, the terminal device determines a positioning request.

In some embodiments, determining the positioning request by the terminal includes two situations. In the first situation, after the terminal determines the positioning request, it sends the positioning request to the network device. In the second situation, the network device sends the positioning request to the terminal.

The positioning request is used to indicate the network device to send resource configuration parameters of a PRS and/or the PRS to the terminal device, or the positioning request is used to indicate the terminal device to send a positioning measurement result to the network device.

At 402, the network device determines a positioning request.

At 403, the terminal device and the network device transmit the PRS based on the positioning request or the resource configuration parameters of the PRS.

Optionally, the above PRS includes: an uplink signal for positioning, such as a sounding reference signal (SRS) or other uplink signal (e.g., a random access preamble), or a downlink PRS. That is, the PRS includes an uplink signal sent by the terminal device to the network device or a downlink PRS sent by the network device to the terminal device.

Optionally, when the positioning request is used to indicate the network device to send the resource configuration parameters and/or the PRS to the terminal device, 4 main cases are described as follows.

In the first case, after the terminal device determines the positioning request, the positioning request is sent to the access network device, that is, the UE sends the positioning request to the gNB.

In some embodiments, when the terminal device sends the positioning request to the access network device, the method includes the following ways at 1.1 to 1.2.

At 1.1, the positioning request sent by the terminal device is received through a physical random access channel (PRACH).

Optionally, a dedicated random access resource is used to indicate the positioning request, and the dedicated random access resource includes at least one of time-frequency resources or random access preamble resources.

In some embodiments, when the terminal device sends the positioning request to the access network device, the terminal device recommends the resource configuration parameters of the PRS to the access network device; or, the terminal device does not recommend the resource configuration parameters of the PRS to the access network device but the access network device directly indicates the resource configuration parameters.

As an example, when the terminal device does not recommend resource configuration parameters to the access network device, the terminal only sends the positioning request through the PRACH, the access network device indicates the resource configuration parameters through a message (i.e. the Msg2) in a 4-step RACH and sends the downlink PRS to the terminal device at the same time. The terminal device measures the downlink PRS sent by the base station based on the resource configuration parameters, and then feeds back a measurement result to the access network device through a message (i.e., the Msg3) in the 4-step RACH. The access network device receives the measurement result sent by the terminal device.

As an example, when the terminal device recommends the resource configuration parameters to the access network device, the terminal device may also send positioning request supplementary information to the access network device. The positioning request supplementary information includes first indication information of the PRS, the first indication information is information of resource configuration recommendation parameters of the PRS recommended by the terminal device to the access network device. Optionally, the positioning request supplementary information is sent through physical uplink shared channel (PUSCH) resources in the Msg3 of the 4-step RACH or the Msg A of the 2-step RACH.

Optionally, the access network device indicates the resource configuration parameters to the terminal device, so that the terminal device measures the PRS based on the resource configuration parameters.

At 1.2, the positioning request sent by the terminal device is received through a scheduling request (SR).

In some embodiments, the terminal device sends the positioning request on a physical uplink control channel (PUCCH) through the SR.

Optionally, after the access network device receives the SR, the access network device allocates PUSCH resources to the terminal device, and the terminal sends information of resource configuration recommendation parameters of the PRS on the PUSCH.

In the second case, after the access network device determines the positioning request, the positioning request is sent to the terminal device, that is, the gNB sends the positioning request to the UE.

In some embodiments, the access network device sends the positioning request to the terminal device by sending a paging message to the terminal device. The access network device sends a paging message to the terminal device, where the paging message includes the positioning request. Optionally, the terminal device also receives a first downlink signaling sent by the access network device. The first downlink signaling is used to indicate third indication information of the PRS, and the third indication information includes the resource configuration parameters. The first downlink signaling includes at least one of: an RRC signaling, an MAC signaling, and a DCI signaling.

In some embodiments, the access network device may also send the positioning request to the terminal device by directly sending a downlink signaling. That is, the access network device sends a second downlink signaling to the terminal device, where the second downlink signaling is used to indicate the positioning request through fourth indication information, the second downlink signaling includes at least one of the RRC signaling, the MAC signaling, and the DCI signaling, and the fourth indication information includes the resource configuration parameters of the PRS.

In the third case, after the terminal device determines the positioning request, the positioning request is sent to the network element with the LMF, that is, the UE sends the positioning request to the LMF.

Optionally, when the terminal sends the positioning request to the LMF, the terminal also sends the resource configuration recommendation parameters of the PRS to the LMF; or the terminal receives the resource configuration parameters directly sent by the LMF; or the terminal receives the resource configuration parameters sent by the LMF via the access network device.

In the fourth case, after the LMF determines the positioning request, the positioning request is sent to the terminal device, that is, the LMF sends the positioning request to the UE.

Optionally, when the LMF sends the positioning request to the terminal, it directly sends the resource configuration parameters to the terminal device; or the LMF sends the resource configuration parameters to the terminal device via the access network device.

In some embodiments, the resource configuration parameters include at least one of a resource mapping identifier (ID) and a beam identifier.

The resource mapping identifier is used to indicate a time-frequency resource position, and the beam identifier is used to indicate a beam for transmitting the PRS.

Optionally, the network device sends resource indication information to the terminal device. The resource indication information includes at least one of: a mapping relationship between resource mapping identifiers and time-frequency resource location parameters, and a mapping relationship between beam identifiers and reference signal identifiers indicating beam directions. The resource indication information is information of a resource position and/or a beam direction in which the network device indicates to the terminal device to transmit the PRS. The network device may be implemented as an LMF or an access network device.

That is, in some embodiments, a first correspondence between resource mapping identifiers and time-frequency resource location parameters is preconfigured; and/or, a second corresponding relationship between beam identifiers and reference signal identifiers indicating beam directions is preconfigured.

In some embodiments, the above time-frequency resource location parameters include at least one of frequency domain parameters, time domain parameters and space domain parameters.

It should be noted that, the above content is described by taking the positioning request indicating the network device to send the resource configuration parameters of the PRS and/or the PRS to the terminal device as an example. In some embodiments, the positioning request is used to indicate the terminal to send the measurement result to the network device.

At 404, the terminal device sends a positioning measurement result to the network device based on the positioning request.

That is, the terminal has obtained the measurement result by measuring the downlink PRS. Then, the terminal sends a positioning request that requests to send the measurement result to the network device.

In response to the positioning request indicating the terminal to send the positioning measurement result to the network device, the positioning measurement result sent by the terminal device is received based on the positioning request.

Optionally, when the positioning request is used to indicate to send the positioning measurement result, the positioning request is sent through the PRACH, so that the measurement result is sent through the PUSCH in the Msg3 of the 4-step RACH or the Msg A of the 2-step RACH.

In some embodiments, the positioning request may also be sent through the SR, and the measurement result is sent through the PUSCH indicated by DCI signaling scheduling The DCI signaling scheduling is sent to the terminal device after the access network device receives the SR.

Optionally, the positioning request is a request sent by the network device to the terminal device. As an example, the access network device sends a paging message to the terminal device, and the paging message includes the positioning request. Since the positioning request is used to indicate the terminal device to send the positioning measurement result to the network device, the terminal device sends the positioning measurement result to the access network device through the PUSCH resources in the Msg3 of the 4-step RACH or the Msg A of the 2-step RACH.

To sum up, with the method for reference signal transmission according to the embodiment, the positioning request is used to indicate the PRS transmission. That is, after the positioning request is determined, the resource configuration parameters are determined based on the positioning request and the PRS is transmitted, thus avoiding a signaling waste caused by redundant PRS transmission, and the problem of large positioning delay and low accuracy caused by the relatively large PRS transmission period. In addition, the positioning request is also used to indicate the transmission of the positioning measurement result. That is, after the positioning request is determined, the positioning measurement result is transmitted, thus providing a method for sending the positioning measurement result in a non-periodic way.

FIG. 5 is a structural block diagram of an apparatus for reference signal transmission according to an exemplary embodiment of the disclosure. As shown in FIG. 5, the apparatus includes: a processing module 510, configured to determine a positioning request.

The positioning request is configured to indicate a network device to send resource configuration parameters of a PRS and/or the PRS to the terminal device; or the positioning request is configured to indicate the terminal device to send a positioning measurement result to the network device.

In an optional embodiment, the apparatus also includes: a transmission module 520, configured to transmit the PRS based on the positioning request or the resource configuration parameters of the PRS, in which the positioning request is configured to indicate the network device to send the resource configuration parameters of the PRS and/or the PRS to the terminal device.

The transmission module 520 is further configured to send the positioning measurement result to the network device based on the positioning request, in which the positioning request is configured to indicate the terminal device to send the positioning measurement result to the network device.

In an optional embodiment, the apparatus also includes: the transmission module 520 configured to send the positioning request to the network device.

In an optional embodiment, the network device is an access network device or a network element with a location management function.

In an optional embodiment, the transmission module 520 is further configured to send the positioning request to the access network device through a random access channel; or the transmission module 520 is further configured to send the positioning request to the access network device through a scheduling request (SR).

In an optional embodiment, the positioning request is configured to indicate the network device to send the resource configuration parameters of the PRS and/or the PRS to the terminal device. The transmission module 520 is further configured to send positioning request supplementary information to the access network device. The positioning request supplementary information includes first indication information of the PRS, and the first indication information is information of resource configuration recommendation parameters of the PRS recommended by the terminal device to the access network device.

In an optional embodiment, the positioning request supplementary information is sent through a Msg3 in a 4-step random access channel or a Msg A in a 2-step random access channel.

In an optional embodiment, the positioning request is configured to indicate the network device to send the resource configuration parameters of the PRS and/or the PRS to the terminal device. The transmission module 520 is further configured to receive second indication information of the PRS sent by the access network device through a Msg2 in a 4-step RACH. The second indication information is configured to indicate the resource configuration parameters of the PRS sent by the access network device.

In an optional embodiment, the processing module 510 is further configured to measure the PRS sent by the access network device based on the resource configuration parameters, and send a measurement result to the access network device through a Msg3 in the 4-step random access channel.

In an optional embodiment, the positioning request is configured to indicate the terminal device to send the positioning measurement result to the network device. The transmission module 520 is further configured to send the positioning measurement result to the access network device through physical uplink shared channel resources in a Msg3 of a 4-step random access channel or in a Msg A of a 2-step random access channel.

In an optional embodiment, the positioning request is configured to indicate the terminal device to send the positioning measurement result to the network device. The transmission module 520 is further configured to send the positioning measurement result to the access network device through physical uplink shared channel resources scheduled by the access network device based on the SR.

In an optional embodiment, the transmission module 520 is further configured to receive the positioning request sent by the network device.

In an optional embodiment, the network device is an access network device or a network element with a location management function.

In an optional embodiment, the transmission module 520 is further configured to receive a paging message sent by the access network device. The paging message includes the positioning request.

In an optional embodiment, the positioning request is configured to indicate the network device to send the resource configuration parameters of the PRS and/or the PRS to the terminal device. The transmission module 520 is further configured to receive a first downlink signaling sent by the access network device. The first downlink signaling is configured to indicate third indication information of the PRS, and the third indication information includes the resource configuration parameters; and the first downlink signaling includes at least one of: a radio resource control signaling, a medium access control signaling, or a downlink control information signaling.

In an optional embodiment, the positioning request is configured to indicate the network device to send the resource configuration parameters of the PRS and/or the PRS to the terminal device. The transmission module 520 is further configured to receive a second downlink signaling sent by the access network device. The second downlink signaling is configured to indicate the positioning request through fourth indication information, and the second downlink signaling includes at least one of: a radio resource control signaling, a medium access control signaling, or a downlink control information signaling; the fourth indication information includes the resource configuration parameters.

In an optional embodiment, the resource configuration parameters include at least one of a resource mapping identifier and a beam identifier.

In an optional embodiment, the transmission module 520 is further configured to receive resource indication information sent by the network device. The resource indication information includes at least one of: a mapping relationship between resource mapping identifiers and time-frequency resource location parameters, and a mapping relationship between beam identifiers and reference signal identifiers indicating beam directions. The resource indication information is information of a resource position and/or a beam direction in which the network device indicates to the terminal device to transmit the PRS.

In an optional embodiment, a first correspondence between resource mapping identifiers and time-frequency resource location parameters is preconfigured; and/or a second corresponding relationship between beam identifiers and reference signal identifiers indicating beam directions is preconfigured.

In an optional embodiment, the time-frequency resource location parameters include at least one of frequency domain parameters, time domain parameters and space domain parameters.

In an optional embodiment, the positioning reference signal includes: an uplink signal for positioning; or a downlink PRS.

FIG. 6 is a structural block diagram of an apparatus for reference signal transmission according to another exemplary embodiment of the disclosure. As shown in FIG. 6, the apparatus includes: a processing module 610, configured to determine a positioning request.

The positioning request is configured to indicate the network device to send resource configuration parameters of a positioning reference signal (PRS) and/or the PRS to a terminal device; or the positioning request is configured to indicate the terminal device to send a positioning measurement result to the network device.

In an optional embodiment, the apparatus also includes: a transmission module 620 is configured to transmit the PRS based on the positioning request or the resource configuration parameters of the PRS, in which the positioning request is configured to indicate the network device to send the resource configuration parameters of the PRS and/or the PRS to the terminal device.

The transmission module 620 is further configured to receive the positioning measurement result sent by the terminal device based on the positioning request, in which the positioning request is configured to indicate the terminal device to send the positioning measurement result to the network device.

In an optional embodiment, the apparatus also includes: the transmission module 620 configured to receive the positioning request sent by the terminal device.

In an optional embodiment, the network device is an access network device. The transmission module 620 is further configured to receive the positioning request sent by the terminal device through a random access channel. Alternatively, the transmission module 620 is further configured to receive the positioning request sent by the terminal device through a scheduling request (SR).

In an optional embodiment, the positioning request is configured to indicate the network device to send the resource configuration parameters of the PRS and/or the PRS to the terminal device. The transmission module 620 is further configured to receive positioning request supplementary information sent by the terminal device. The positioning request supplementary information includes first indication information of the PRS, and the first indication information is information of resource configuration recommendation parameters of the PRS recommended by the terminal device to the access network device.

In an optional embodiment, the positioning request supplementary information is sent through a Msg3 in a 4-step random access channel or a Msg A in a 2-step random access channel.

In an optional embodiment, the positioning request is configured to indicate the network device to send the resource configuration parameters of the PRS and/or the PRS to the terminal device. The transmission module 620 is further configured to send second indication information of the PRS to the terminal device through a Msg2 in a 4-step RACH. The second indication information is configured to indicate the resource configuration parameters of the PRS sent by the access network device.

In an optional embodiment, the positioning request is configured to indicate the terminal device to send the positioning measurement result to the network device. The transmission module 620 is also configured to receive the positioning measurement result sent by the terminal device through physical uplink shared channel resources in a Msg3 of a 4-step random access channel or in a Msg A of a 2-step random access channel.

In an optional embodiment, the positioning request is configured to indicate the terminal device to send the positioning measurement result to the network device. The transmission module 620 is further configured to receive the positioning measurement result sent by the terminal device through physical uplink shared channel resources scheduled by the access network device based on the SR.

In an optional embodiment, the transmitting module 620 is further configured to send the positioning request to the terminal device.

In an optional embodiment, the transmission module 620 is further configured to send a paging message to the terminal device, where the paging message includes the positioning request.

In an optional embodiment, the positioning request is configured to indicate the network device to send the resource configuration parameters of the PRS and/or the PRS to the terminal device. The transmission module 620 is further configured to send a first downlink signaling to the terminal device. The first downlink signaling is configured to indicate third indication information of the PRS, and the third indication information includes the resource configuration parameters; and the first downlink signaling includes at least one of: a radio resource control signaling, a medium access control signaling, or a downlink control information signaling.

In an optional embodiment, the positioning request is configured to indicate the terminal device to send the positioning measurement result to the network device. The transmission module 620 is further configured to receive the positioning measurement result sent by the terminal device through physical uplink shared channel resources in a Msg3 of a 4-step random access channel or in a Msg A in a 2-step random access channel.

In an optional embodiment, the positioning request is configured to indicate the network device to send the resource configuration parameters of the PRS and/or the PRS to the terminal device. The transmission module 620 is further configured to send a second downlink signaling to the terminal device. The second downlink signaling is configured to indicate the positioning request through fourth indication information, and the second downlink signaling includes at least one of: a radio resource control signaling, a medium access control signaling, or a downlink control information signaling; the fourth indication information includes the resource configuration parameters.

In an optional embodiment, the resource configuration parameters include at least one of a resource mapping identifier and a beam identifier.

In an optional embodiment, the transmission module 620 is further configured to send resource indication information to the terminal device. The resource indication information includes at least one of: a mapping relationship between resource mapping identifiers and time-frequency resource location parameters, and a mapping relationship between beam identifiers and reference signal identifiers indicating beam directions. The resource indication information is information of a resource position and/or a beam direction in which the network device indicates to the terminal device to transmit the PRS.

In an optional embodiment, a first correspondence between resource mapping identifiers and time-frequency resource location parameters is preconfigured; and/or, a second corresponding relationship between beam identifiers and reference signal identifiers indicating beam directions is preconfigured.

In an optional embodiment, the time-frequency resource location parameters include at least one of frequency domain parameters, time domain parameters and space domain parameters.

In an optional embodiment, the positioning reference signal includes: an uplink signal for positioning; or a downlink PRS.

To sum up, with the apparatus for reference signal transmission according to the embodiment, the positioning request is used to indicate the PRS transmission. That is, after the positioning request is determined, the resource configuration parameters are determined based on the positioning request and the PRS is transmitted, thus avoiding a signaling waste caused by redundant PRS transmission, and the problem of large positioning delay and low accuracy caused by the relatively large PRS transmission period. In addition, the positioning request is also used to indicate the transmission of the positioning measurement result. That is, after the positioning request is determined, the positioning measurement result is transmitted, thus providing a method for sending the positioning measurement result in a non-periodic way.

FIG. 7 shows a structural schematic diagram of a communication device 700 (i.e., the terminal device or the network device) according to an exemplary embodiment of the disclosure, the communication device 700 includes: a processor 701, a receiver 702, a transmitter 703, a memory 704 and a bus 705.

The processor 701 includes one or more processing cores, and the processor 701 executes various functional applications and information processing by running software programs and modules.

The receiver 702 and the transmitter 703 may be realized as a communication component, which may be a communication chip.

The memory 704 is connected to the processor 701 through a bus 705.

The memory 704 may be used to store at least one instruction, and the processor 701 is used to execute the at least one instruction, so as to implement various steps in the foregoing method embodiments.

In addition, the memory 704 may be realized by any type of volatile or non-volatile storage device or their combination which include but not limited to: a magnetic disk or an optical disk, an electrically erasable programmable read only memory (EEPROM), an erasable programmable read only memory (EPROM), a static random access memory (SRAM), a read only memory (ROM), a magnetic memory, a flash memory, a programmable read-only memory (PROM).

An exemplary embodiment of the disclosure also provides an information transmission system which includes: a terminal device and a network device;

The terminal device includes the apparatus for reference signal transmission in the embodiment shown in FIG. 5.

The network device includes the apparatus for reference signal transmission in the embodiment shown in FIG. 6.

An exemplary embodiment of the disclosure also provides a computer-readable storage medium storing at least one instruction, at least one program, a code set or an instruction set, which are loaded and executed by the processor to implement the steps of the method for reference signal transmission performed by the terminal, and the steps of the method for reference signal transmission performed by the network device, according to the above method embodiments.

It should be understood that the "a plurality of" mentioned herein refers to two or more than two. "And/or" describes an association relationship between associated objects, indicating that there may be three types of relationships, for example, A and/or B may indicate: A exists alone, A and B exist simultaneously, and B exists alone. The character "/" generally indicates that the contextual objects are in an "or" relationship.

Other embodiments of the disclosure may be readily apparent to those skilled in the art from consideration of the specification and practice of the invention disclosed herein. The disclosure is intended to cover any modification, use or adaptation of the disclosure, which follow the general principles of the disclosure and include common knowledge or conventional technical means in the art not disclosed in the disclosure. The specification and examples are to be considered exemplary only, with a true scope and spirit of the disclosure being indicated by the following claims.

It should be understood that the disclosure is not limited to the precise constructions which have been described above and shown in the drawings, and various modifications and changes may be made without departing from the scope of the disclosure. The scope of the disclosure is limited only by the appended claims.

## Claims

1. A method for reference signal transmission, applicable to a terminal device, the method comprising:
determining a positioning request,
wherein the positioning request is configured to indicate a network device to send resource configuration parameters of a positioning reference signal (PRS) and/or the PRS to the terminal device; or the positioning request is configured to indicate the terminal device to send a positioning measurement result to the network device.

2. The method of claim 1, further comprising:
transmitting the PRS based on the positioning request or the resource configuration parameters of the PRS, wherein the positioning request is configured to indicate the network device to send the resource configuration parameters of the PRS and/or the PRS to the terminal device; or
sending the positioning measurement result to the network device based on the positioning request, wherein the positioning request is configured to indicate the terminal device to send the positioning measurement result to the network device.

3. The method of claim 1, further comprising:
sending the positioning request to the network device.

4. The method of claim 3, wherein the network device is an access network device or a network element with a location management function.

5. The method of claim 4, wherein sending the positioning request to the network device comprises:
sending the positioning request to the access network device through a random access channel; or,
sending the positioning request to the access network device through a scheduling request (SR).

6. The method of claim 5, wherein the positioning request is configured to indicate the network device to send the resource configuration parameters of the PRS and/or the PRS to the terminal device;
wherein sending the positioning request to the access network device through the random access channel comprises:
sending positioning request supplementary information to the access network device, wherein the positioning request supplementary information comprises first indication information of the PRS, and the first indication information is information of resource configuration recommendation parameters of the PRS recommended by the terminal device to the access network device.

7. The method according to claim 6, wherein the positioning request supplementary information is sent through a Msg3 in a 4-step random access channel or a Msg A in a 2-step random access channel.

8. The method of claim 5, wherein the positioning request is configured to indicate the network device to send the resource configuration parameters of the PRS and/or the PRS to the terminal device;
wherein sending the positioning request to the access network device through the random access channel comprises:
receiving second indication information of the PRS sent by the access network device through a Msg2 in a 4-step random access channel, wherein the second indication information is configured to indicate the resource configuration parameters of the PRS sent by the access network device.

9. The method of claim 8, further comprising:
measuring the PRS sent by the access network device based on the resource configuration parameters, and sending a measurement result to the access network device through a Msg3 in the 4-step random access channel.

10. The method of claim 5, wherein the positioning request is configured to indicate the terminal device to send the positioning measurement result to the network device;
wherein sending the positioning request to the access network device through the random access channel comprises:
sending the positioning measurement result to the access network device through physical uplink shared channel resources in a Msg3 of a 4-step random access channel or in a Msg A of a 2-step random access channel.

11. The method of claim 5, wherein the positioning request is configured to indicate the terminal device to send the positioning measurement result to the network device;
wherein sending the positioning request to the access network device through the SR comprises:
sending the positioning measurement result to the access network device through physical uplink shared channel resources scheduled by the access network device based on the SR.

12. The method of claim 1, wherein determining the positioning request comprises:
receiving the positioning request sent by the network device.

13. The method of claim 12, wherein the network device is an access network device or a network element with a location management function.

14. The method of claim 13, wherein receiving the positioning request sent by the network device comprises:
receiving a paging message sent by the access network device, wherein the paging message comprises the positioning request.

15. The method of claim 14, wherein the positioning request is configured to indicate the network device to send the resource configuration parameters of the PRS and/or the PRS to the terminal device;
wherein the method further comprises:
receiving a first downlink signaling sent by the access network device, wherein the first downlink signaling is configured to indicate third indication information of the PRS, and the third indication information comprises the resource configuration parameters; and the first downlink signaling comprises at least one of: a radio resource control signaling, a medium access control signaling, or a downlink control information signaling.

16. The method of claim 13, wherein the positioning request is configured to indicate the terminal device to send the positioning measurement result to the network device;
wherein the method further comprises:
sending the positioning measurement result to the access network device through physical uplink shared channel resources in a Msg3 of a 4-step random access channel or in a Msg A in a 2-step random access channel.

17. The method of claim 13, wherein the positioning request is configured to indicate the network device to send the resource configuration parameters of the PRS and/or the PRS to the terminal device;
wherein receiving the positioning request sent by the access network device comprises:
receiving a second downlink signaling sent by the access network device, wherein the second downlink signaling is configured to indicate the positioning request through fourth indication information, and the second downlink signaling comprises at least one of: a radio resource control signaling, a medium access control signaling, or a downlink control information signaling; the fourth indication information comprises the resource configuration parameters.

18. The method of claim 1, wherein the resource configuration parameters comprise at least one of a resource mapping identifier and a beam identifier.

19. The method of any one of claims 1 to 18, further comprising:
receiving resource indication information sent by the network device, wherein the resource indication information comprises at least one of: a mapping relationship between resource mapping identifiers and time-frequency resource location parameters, and a mapping relationship between beam identifiers and reference signal identifiers indicating beam directions;
the resource indication information is information of a resource position and/or a beam direction in which the network device indicates to the terminal device to transmit the PRS.

20. The method of any one of claims 1 to 18, wherein
a first correspondence between resource mapping identifiers and time-frequency resource location parameters is preconfigured; and/or
a second corresponding relationship between beam identifiers and reference signal identifiers indicating beam directions is preconfigured.

21. The method of claim 20, wherein the time-frequency resource location parameters comprise at least one of: frequency domain parameters, time domain parameters and space domain parameters.

22. The method of any one of claims 1 to 18, wherein the PRS comprises:
an uplink signal for positioning; or
a downlink PRS.

23. A method for reference signal transmission, applicable to a network device, the method comprising:
determining a positioning request,
wherein the positioning request is configured to indicate the network device to send resource configuration parameters of a positioning reference signal (PRS) and/or the PRS to a terminal device; or the positioning request is configured to indicate the terminal device to send a positioning measurement result to the network device.

24. The method of claim 23, further comprising:
transmitting the PRS based on the positioning request or the resource configuration parameters of the PRS, wherein the positioning request is configured to indicate the network device to send the resource configuration parameters of the PRS and/or the PRS to the terminal device; or
receiving the positioning measurement result sent by the terminal device based on the positioning request, wherein the positioning request is configured to indicate the terminal device to send the positioning measurement result to the network device.

25. The method of claim 23, wherein determining the positioning request comprises:
receiving the positioning request sent by the terminal device.

26. The method of claim 25, wherein the network device is an access network device;
wherein receiving the positioning request sent by the terminal device comprises:
receiving the positioning request sent by the terminal device through a random access channel; or
receiving the positioning request sent by the terminal device through a scheduling request (SR).

27. The method of claim 26, wherein the positioning request is configured to indicate the network device to send the resource configuration parameters of the PRS and/or the PRS to the terminal device;
wherein receiving the positioning request sent by the terminal device through the random access channel comprises:
receiving positioning request supplementary information sent by the terminal device, wherein the positioning request supplementary information comprises first indication information of the PRS, and the first indication information is information of resource configuration recommendation parameters of the PRS recommended by the terminal device to the access network device.

28. The method of claim 27, wherein the positioning request supplementary information is sent through a Msg3 in a 4-step random access channel or a Msg A in a 2-step random access channel.

29. The method of claim 26, wherein the positioning request is configured to indicate the network device to send the resource configuration parameters of the PRS and/or the PRS to the terminal device;
wherein receiving the positioning request sent by the terminal device through the random access channel comprises:
sending second indication information of the PRS to the terminal device through a Msg2 in a 4-step random access channel, wherein the second indication information is configured to indicate the resource configuration parameters of the PRS sent by the access network device.

30. The method according to claim 26, wherein the positioning request is configured to indicate the terminal device to send the positioning measurement result to the network device;
wherein receiving the positioning request sent by the terminal device through the random access channel comprises:
receiving the positioning measurement result sent by the terminal device through physical uplink shared channel resources in a Msg3 of a 4-step random access channel or in a Msg A of a 2-step random access channel.

31. The method of claim 26, wherein the positioning request is configured to indicate the terminal device to send the positioning measurement result to the network device;
wherein receiving the positioning request sent by the terminal device through the SR comprises:
receiving the positioning measurement result sent by the terminal device through physical uplink shared channel resources scheduled by the access network device based on the SR.

32. The method of claim 23, further comprising:
sending the positioning request to the terminal device.

33. The method of claim 32, wherein sending the positioning request to the terminal device comprises:
sending a paging message to the terminal device, wherein the paging message comprises the positioning request.

34. The method of claim 33, wherein the positioning request is configured to indicate the network device to send the resource configuration parameters of the PRS and/or the PRS to the terminal device;
wherein the method further comprises:
sending a first downlink signaling to the terminal device, wherein the first downlink signaling is configured to indicate third indication information of the PRS, and the third indication information comprises the resource configuration parameters; and the first downlink signaling comprises at least one of: a radio resource control signaling, a medium access control signaling, or a downlink control information signaling.

35. The method of claim 32, wherein the positioning request is configured to indicate the terminal device to send the positioning measurement result to the network device;
wherein the method further comprises:
receiving the positioning measurement result sent by the terminal device through physical uplink shared channel resources in a Msg3 of a 4-step random access channel or in a Msg A in a 2-step random access channel.

36. The method of claim 32, wherein the positioning request is configured to indicate the network device to send the resource configuration parameters of the PRS and/or the PRS to the terminal device;
wherein sending the positioning request to the terminal device comprises:
sending a second downlink signaling to the terminal device, wherein the second downlink signaling is configured to indicate the positioning request through fourth indication information, and the second downlink signaling comprises at least one of: a radio resource control signaling, a medium access control signaling, or a downlink control information signaling; the fourth indication information comprises the resource configuration parameters.

37. The method of claim 23, wherein the resource configuration parameters comprise at least one of a resource mapping identifier and a beam identifier.

38. The method of any one of claims 23 to 37, further comprising:
sending resource indication information to the terminal device, wherein the resource indication information comprises at least one of: a mapping relationship between resource mapping identifiers and time-frequency resource location parameters, and a mapping relationship between beam identifiers and reference signal identifiers indicating beam directions;
the resource indication information is information of a resource position and/or a beam direction in which the network device indicates to the terminal device to transmit the PRS.

39. The method of any one of claims 23 to 37, wherein
a first correspondence between resource mapping identifiers and time-frequency resource location parameters is preconfigured; and/or
a second corresponding relationship between beam identifiers and reference signal identifiers indicating beam directions is preconfigured.

40. The method of claim 39, wherein the time-frequency resource location parameters comprise at least one of: frequency domain parameters, time domain parameters and space domain parameters.

41. The method of any one of claims 23 to 37, wherein the PRS comprises:
an uplink signal for positioning; or
a downlink PRS.

42. An apparatus for reference signal transmission, applicable to a terminal device, the method comprising:
a processing module, configured to determine a positioning request;
wherein the positioning request is configured to indicate a network device to send resource configuration parameters of a positioning reference signal (PRS) and/or the PRS to the terminal device; or the positioning request is configured to indicate the terminal device to send a positioning measurement result to the network device.

43. An apparatus for reference signal transmission, applicable to a network device, the method comprising:
a processing module, configured to determine a positioning request;
wherein the positioning request is configured to indicate the network device to send resource configuration parameters of a positioning reference signal (PRS) and/or the PRS to a terminal device; or the positioning request is configured to indicate the terminal device to send a positioning measurement result to the network device.

44. A terminal device, comprising:
a processor;
a transceiver connected to the processor; and
a memory configured to store an instruction executable by the processor;
wherein, the processor is configured to load and execute the executable instruction to implement the method for reference signal transmission according to any one of claims 1 to 22.

45. A network device, comprising:
a processor;
a transceiver connected to the processor; and
a memory configured to store an instruction executable by the processor;
wherein, the processor is configured to load and execute the executable instruction to implement the method for reference signal transmission according to any one of claims 23 to 41.

46. A computer-readable storage medium storing at least one instruction, at least one program, at least one code set or at least one instruction set, which are loaded and executed by the processor, the method for reference signal transmission according to any one of claims 1 to 41 is implemented.
